# EUROPEAN PATENT APPLICATION

(11) **EP 3 291 101 A1**
(43) Date of publication of application: **07.03.2018**
(21) Application number: 17183579.6
(22) Date of filing: 27.07.2017
(51) Int. Cl.: G06F 17/27, G06F 17/28

(54) **MESSAGE COMMUNICATING METHOD AND APPARATUS**

(30) Priority: 31.08.2016 WO PCT/CN2016/097720
(71) Applicant: Beijing Xiaomi Mobile Software Co., Ltd., Beijing 100085 (CN)
(72) Inventor: LIU, Ming, Haidian District Beijing 100085 (CN); WU, Liangxiong, Haidian District Beijing 100085 (CN); LUO, Yanfei, Haidian District Beijing 100085 (CN)
(74) Representative: Robson, Aidan John

(57) **Abstract**

The present invention relates to a message communicating method and apparatus, a computer program and a recording medium, which pertains to the technical filed of communications. The method comprises: acquiring a communication message sent by a current contact in a communication application; determining a message type which matches the communication message; acquiring at least one candidate word for replying to the communication message, in accordance with the message type which matches the communication message; and displaying the at least one candidate word. The present invention solves the problem in the related art that the efficiency for generation of candidate words by an inputting method APP is low, and achieves the effect that, after a communication message is received, at least one candidate word will be generated automatically for replying to the communication message. Accordingly, the number of operations required to be performed by the user in replying to the communication message can be reduced and the efficiency for generation of candidate words can be improved, thereby facilitating improving the efficiency of replying to the communication message.

## Description

### TECHNICAL FIELD

The present application generally relates to the technical field of communications, and more particularly to a message communicating method and apparatus, a computer program and a recording medium.

### BACKGROUND

Applications (APPs) having a messaging function, such as short message service (SMS) APPs, instant messenger APPs and social networking APPs, can be installed in a terminal device such as a mobile phone or a tablet PC. Users can communicate with each other via such APPs.

Taking the SMS APP as an example, when a user sends a short message, the SMS APP will invoke an inputting method APP. The user then uses the inputting method APP to input a coded string. Next, the inputting method APP generates at least one candidate word corresponding to the coded string in accordance with a code matching rule, and thereafter displays the candidate word. Taking an example where a pinyin inputting method is adopted, supposing the coded string inputted by the user is "shouji", the inputting method APP will generate candidate words such as "shǒu ji̅ (which means 'mobile phone' in English)", "sho̅u jí (which means 'collect' in English)", "shǒu jì (which means 'essays' in English)" and "sho̅u jì (which means 'send-receive' in English)" for the user to select therefrom. After a candidate word to be input is selected by the user, the selected candidate word will be inputted into an input box of the SMS APP. After the user completes editing of the short message in the input box, the message can be sent out via the SMS APP.

### SUMMARY

The present invention provides a message communicating method and apparatus, a computer program and a recording medium as follows.

According to a first aspect, a message communicating method is provided. The method comprises: acquiring a communication message sent by a current contact in a communication application, the communication application being an application with a messaging function; determining a message type which matches the communication message; acquiring at least one candidate word for replying to the communication message, in accordance with the message type which matches the communication message; and displaying the at least one candidate word.

Optionally, determining the message type which matches the communication message comprises: splitting the communication message into multiple semantic elements; extracting a target semantic element from the communication message, in accordance with a message type in question; detecting whether the target semantic element is included in a word library corresponding to the message type in question; and determining the message type in question as the message type which matches the communication message, if the target semantic element is included in the word library corresponding to the message type in question.

Optionally, extracting the target semantic element from the communication message in accordance with a message type in question comprises: determining a part-of-speech for each of the multiple semantic elements; extracting the target semantic element from the communication message, in accordance with a semantic element extraction rule corresponding to the message type in question and the part-of-speech for each of the multiple semantic elements, wherein the semantic element extraction rule prescribes a part-of-speech feature of the target semantic element to be extracted from the communication message.

Optionally, acquiring at least one candidate word for replying to the communication message, in accordance with the message type which matches the communication message, comprises: extracting, from the communication message, a noun indicated by a target semantic element, if the message type which matches the communication message is a noun-selection type. The target semantic element is acquired by extracting from the communication message in accordance with the noun-selection type, and the at least one candidate word for replying to the communication message includes the noun.

Optionally, acquiring at least one candidate word for replying to the communication message, in accordance with the message type which matches the communication message, comprises: extracting a verb in the target semantic element, if the message type which matches the communication message is a verb-selection type, wherein the target semantic element is acquired by extracting from the communication message in accordance with the verb-selection type; and determining, based on the verb, the at least one candidate word for replying to the communication message. The at least one candidate word for replying to the communication message includes at least one of the following: a positive tense form of the verb, a negative tense form of the verb, a perfect tense form of the verb and an imperfect tense form of the verb.

Optionally, acquiring at least one candidate word for replying to the communication message, in accordance with the message type which matches the communication message, comprises: extracting, from the communication message, a nearest verb from the target semantic element, if the message type which matches the communication message is an interrogative type, wherein the target semantic element is acquired by extracting from the communication message in accordance with the interrogative type; and determining, based on the verb, the at least one candidate word for replying to the communication message, wherein the at least one candidate word for replying to the communication message includes at least one of the following: a positive tense form of the verb, a negative tense form of the verb, a perfect tense form of the verb and an imperfect tense form of the verb.

Optionally, acquiring at least one candidate word for replying to the communication message, in accordance with the message type which matches the communication message, comprises: acquiring at least one preset candidate word corresponding to the target semantic element, if the message type which matches the communication message is a particular type. The target semantic element is acquired by extracting from the communication message in accordance with the particular type, and the at least one candidate word for replying to the communication message includes the at least one candidate word corresponding to the target semantic element.

Optionally, acquiring the communication message sent by the current contact in the communication application comprises: acquiring a communication message sent during a single chat session by the current contact in the communication application; or acquiring a communication message sent during a group chat session by the current contact in the communication application.

Optionally, the communication message is the last n communication messages sent by the current contact, wherein n is an integer equal to or greater than 1.

Optionally, the method further comprises: receiving a selection from the at least one candidate word being displayed, and writing the selected candidate word into an input box.

According to a second aspect, a message communicating apparatus is provided. The apparatus comprises: a message acquisition module configured to acquire a communication message sent by a current contact in a communication application, the communication application being an application with a messaging function; a type determination module configured to determine a message type which matches the communication message acquired by the first acquisition module; a candidate word acquisition module configured to acquire at least one candidate word for replying to the communication message in accordance with the message type which matches the communication message determined by the determination module; and a candidate word displaying module configured to display the at least one candidate word acquired by the second acquisition module.

Optionally, the type determination module comprises: a splitting sub-module configured to split the communication message into multiple semantic elements; an extraction sub-module configured to extract a target semantic element from the communication message acquired by the splitting sub-module, in accordance with a message type in question; a detection sub-module configured to detect whether the target semantic element extracted by the first extraction sub-module is included in a word library corresponding to the message type in question; and a determination sub-module configured to determine the message type in question as the message type which matches the communication message, when the detection sub-module detected that the target semantic element is included in the word library corresponding to the message type in question.

Optionally, the extraction sub-module is configured to: determine a part-of-speech for each of the multiple semantic elements; and extract the target semantic element from the communication message, in accordance with a semantic element extraction rule corresponding to the message type in question and the part-of-speech for each of the multiple semantic elements. The semantic element extraction rule prescribes a part-of-speech feature of the target semantic element to be extracted from the communication message.

Optionally, the candidate word acquisition module comprises a first acquisition sub-module configured to: extract, from the communication message, a noun indicated by a target semantic element, when the message type which matches the communication message is a noun-selection type. The target semantic element is acquired by extracting from the communication message in accordance with the noun-selection type, and the at least one candidate word for replying to the communication message includes the noun.

Optionally, the candidate word acquisition module comprises a second acquisition sub-module configured to: extract a verb in the target semantic element, when the message type which matches the communication message is a verb-selection type, wherein the target semantic element is acquired by extracting from the communication message in accordance with the verb-selection type; and determine, based on the verb, the at least one candidate word for replying to the communication message. The at least one candidate word for replying to the communication message includes at least one of the following: a positive tense form of the verb, a negative tense form of the verb, a perfect tense form of the verb and an imperfect tense form of the verb.

Optionally, the candidate word acquisition module comprises a third acquisition sub-module configured to: extract, from the communication message, a nearest verb from the target semantic element, when the message type which matches the communication message is a interrogative type, wherein the target semantic element is acquired by extracting from the communication message in accordance with the interrogative type; and determine, based on the verb, the at least one candidate word for replying to the communication message. The at least one candidate word for replying to the communication message includes at least one of the following: a positive tense form of the verb, a negative tense form of the verb, a perfect tense form of the verb and an imperfect tense form of the verb.

Optionally, the candidate word acquisition module comprises a fourth acquisition sub-module configured to: acquire at least one preset candidate word corresponding to the target semantic element, when the message type which matches the communication message is a particular type. The target semantic element is acquired by extracting from the communication message in accordance with the particular type, and the at least one candidate word for replying to the communication message includes the at least one candidate word corresponding to the target semantic element.

Optionally, the message acquisition module is configured to acquire a communication message sent during a single chat session by the current contact in the communication application; or acquire a communication message sent during a group chat session by the current contact in the communication application.

Optionally, the communication message is the last n communication messages sent by the current contact, wherein n is an integer equal to or greater than 1.

Optionally, the apparatus further comprises: a candidate word selection module configured to receive a selection from the at least one candidate word being displayed, and to write the selected candidate word into an input box.

According to a third aspect, a message communicating apparatus is provided. The apparatus comprises: a processor; and a memory storing instructions executable by the processor. The processor is configured to: acquire a communication message sent by a current contact in a communication application, the communication application being an application with a messaging function; determine a message type which matches the communication message; acquire at least one candidate word for replying to the communication message, in accordance with the message type which matches the communication message; and display the at least one candidate word.

In one particular embodiment, the steps of the message communicating method are determined by computer program instructions.

Consequently, according to a fourth aspect, the invention is also directed to a computer program for executing the steps of the message communicating method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by embodiments of the present invention may have the following beneficial technical effects.

By acquiring a communication message sent by a current contact in a communication application, determining a message type which matches the communication message, and acquiring at least one candidate word for replying to the communication message in accordance with the determined message type, the technical solutions solve the problem in the related art that the efficiency for generation of candidate words by an inputting method APP is low, and achieve the effect that, after a communication message is received, at least one candidate word is generated automatically for replying to the communication message. Accordingly, the number of operations required to be performed by the user in replying to the communication message is reduced and the efficiency for generation of candidate words is improved, thereby facilitating improving the efficiency of replying to the communication message.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flowchart illustrating a message communicating method according to an exemplary embodiment.
Fig. 2 is a flowchart illustrating a message communicating method according to another exemplary embodiment.
Fig. 3 is an exemplary schematic diagram illustrating an interface of an inputting method APP.
Fig. 4 is a block diagram illustrating a message communicating apparatus according to an exemplary embodiment.
Fig. 5 is a block diagram illustrating a message communicating apparatus according to another exemplary embodiment.
Fig. 6 is a block diagram illustrating an apparatus according to an exemplary embodiment.

### DETAILED DESCRIPTION

Reference will now be made in detail to certain exemplary embodiments, examples of which are illustrated in the accompanying drawings. The following description refers to the accompanying drawings in which the same numbers in different figures represent the same or similar elements unless otherwise indicated. The implementations set forth in the following description of embodiments do not represent all implementations consistent with the invention. Instead, they are merely examples of apparatuses and methods consistent with aspects related to the invention as recited in the appended claims.

In the related art, when a user sends a communication message, at least one candidate word will be generated by an inputting method APP only after a coded string is inputted. Thus, in the related art, the efficiency for generation of candidate words by the inputting method APP is low, thereby further affecting the efficiency for transmission of the communication message. In view of this, embodiments of the present invention provide a message communicating method and an apparatus based on this method, so as to solve the problems in the related art. Regarding technical solutions provided by embodiments of the present invention, the core idea is as follows: by acquiring, through an inputting method APP, a communication message sent by a current contact in a communication application, at least one candidate word is generated automatically in accordance with the communication message, so that the number of operations required to be performed by a user when replying to the communication message is reduced and the efficiency for generation of candidate words is improved.

Steps of the method provided by embodiments of the present invention may be performed by a terminal, such as a mobile phone, a tablet, a computer, etc. Optionally, an inputting method APP is installed and run in the terminal, and the steps may be performed by the inputting method APP. For the sake of brevity, in the following method embodiments, unless otherwise specified, description will be given merely by taking an example where the steps are performed by the inputting method APP, but this does not constitute a limit.

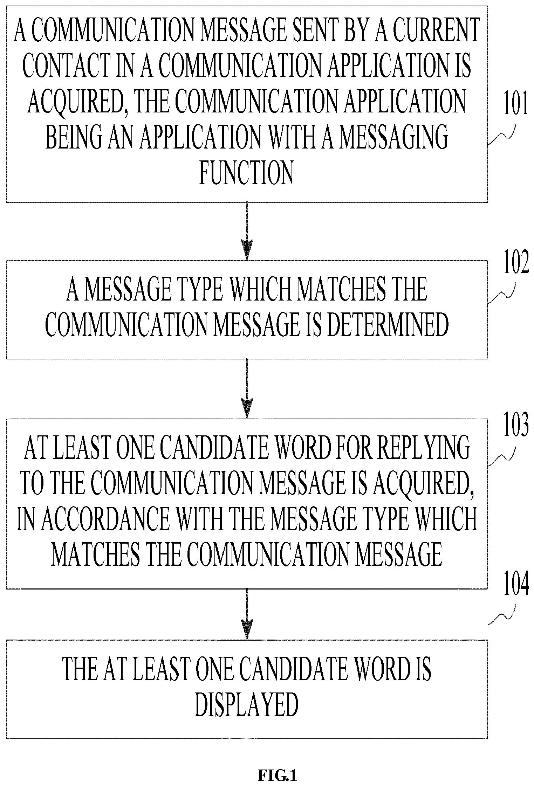

Fig. 1 is a flowchart illustrating a message communicating method according to an exemplary embodiment. The method may comprise the following steps.

At step 101, a communication message sent by a current contact in a communication application is acquired, the communication application being an application with a messaging function.

At step 102, a message type which matches the communication message is determined.

At step 103, at least one candidate word for replying to the communication message is acquired, in accordance with the message type which matches the communication message.

At step 104, the at least one candidate word is displayed.

In conclusion, by acquiring a communication message sent by a current contact in a communication application, determining a message type which matches the communication message, and acquiring at least one candidate word for replying to the communication message in accordance with the determined message type, the method provided by this embodiment solves the problem in the related art that the efficiency for generation of candidate words by an inputting method APP is low, and achieves the effect that, after a communication message is received, at least one candidate word for replying to the communication message is generated automatically. Accordingly, the number of operations required to be performed by the user in replying to the communication message is reduced and the efficiency for generation of candidate words is improved, thereby facilitating improving the efficiency of replying to the communication message.

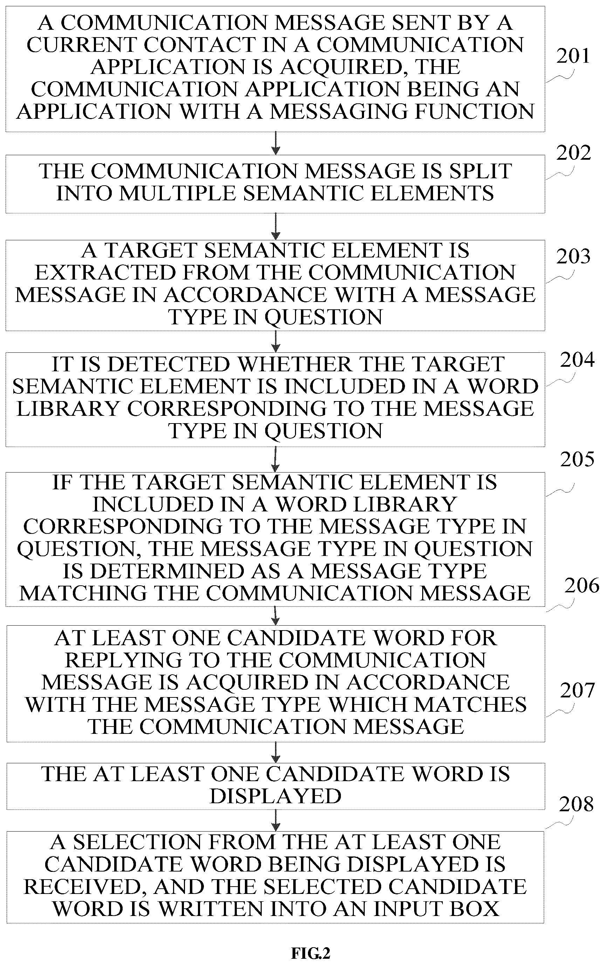

Fig. 2 is a flowchart illustrating a message communicating method according to another exemplary embodiment. For example, the method may be used in an inputting method APP which is installed and run in a terminal. The method may comprise the following steps.

At step 201, a communication message sent by a current contact in a communication application is acquired, the communication application being an application with a messaging function.

In embodiment of the present invention, the communication application is not limited to a specific type. Rather, the communication application may be any APP with a messaging function. For example, the communication application may be a SMS APP, an instant messenger APP, a social networking APP, a payment APP, a shopping APP or the like. The communication message refers to a message sent/received by the communication application. For example, the communication message may be a short message, an instant communicaton message, a session message, a notification message, etc.

In the embodiment of the present invention, the time when the inputting method APP acquires the communication message is not limited. In an example, when the communication application is displaying a session interface, a communication message sent by a current contact corresponding to the session interface is acquired. In this example, before being invoked by the communication application, the inputting method APP may have generated corresponding candidate words based on an acquired communication message, thereby facilitating improving the promptness of displaying the candidate words. In another example, the inputting method APP acquires a communication message sent by a current contact in a communication application, when invoked by the communication application. That is, when the terminal detects an inputting behavior in the communication application, the inputting method APP will acquire a communication message sent by a current contact in the communication application. As a user may only need to read the communication message in the current session interface but does not need to reply to the communication message in the session interface, it will be a waste of processing resources of the terminal if the inputting method APP generates candidate words before being invoked. Thus, in this example, the terminal can be prevented from performing unnecessary operations and processing resources of the terminal can be saved.

In the embodiment of the present invention, the scenario in which the inputting method APP acquires the communication message is not limited. In an example, when the session interface being displayed by the communication application is a single chat session interface, the current contact is a contact in the single chat session. Accordingly, the inputting method APP acquires a communication message sent by the current contact in the communication application during the single chat session. In another example, when the session interface being displayed by the communication application is a group chat session interface, the current contact is at least one contact of the group chat session. Accordingly, the inputting method APP acquires a communication message sent by the current contact in the communication application during the group chat session.

In an example, communication message is the last n communication messages sent by the current contact, wherein n is an integer equal to or greater than 1. Taking into account that the user usually replies to the last communication message sent by the current contact, corresponding candidate words will be determined based on the last communication message for replying to the communication message, thereby facilitating improving accuracy of the generated candidate words and meeting the user's requirements better. In addition, considering that a contact may send multiple communication messages continuously and that the communication message which needs to be replied to by the user may not be the last one (for example, may be the last but one), determination of corresponding candidate words based on the last few communication messages sent by the current contact facilitates improving comprehensiveness and usability of the generated candidate words.

After the inputting method APP acquires the communication message, a message type which matches the communication message will be determined by executing the following steps 202 to 205. In an embodiment of the present invention, the communication message may be categorized into a variety of different message types, which may include but are not limited to at least one of a noun-selection type, a verb-selection type, an interrogative type, and a particular type. The noun-selection type refers a type of communication message for selecting a noun, such as "ni yao man tou, hai yao hua juan? (which means 'Do you want steamed buns or steamed rolls?' in English", "xia jie shi shu xue ke, hai shi yu wen ke? (which means "Is the next class a math or Chinese class?" in English)", "min tian shi qing tian, hai shi duo yun? (which means 'Is tomorrow a sunny day or a cloudy day?' in English)", etc. The verb-selection type refers to a type of communication message for making a selection with respect to a verb. such as "mang bu? (which means 'Are you busy'? in English)", "chi le mei? (which means 'Have you eaten?' in English)", "yao bu yao? (which means 'Do you want it?' in English)", etc. The interrogative type refers to a type of interrogative communication message, which is for example a communication message that ends with a modal particle expressing an interrogative mood, such as "ma", "me", "ne", "a" or "la" (which are modal particles in Chinese). The particular type refers to a type of communication message including a preset specific semantic element, which is for example a communication message including a specific semantic element such as "xie xie (which means 'Thanks' in English)", "sheng ri kuai le (which means 'Happy birthday') in English", "xin nian hao (which means 'Happy new year' in English)". Of course, the above message types are merely exemplary. In practical application, a number of different message types can be set according to actual demands.

At step 202, the communication message is split into multiple semantic elements.

The inputting method APP uses a word segmentation algorithm to split the communication message into multiple semantic elements. The semantic elements include characters and/or words. For example, if the communication message is "chi fan le me? (which means 'Have you eaten yet?' in English", the semantic elements as a result of the splitting may include "chi fan", "le" and "me".

At step 203, a target semantic element is extracted from the communication message in accordance with a message type in question.

The target semantic element is used for determining a message type which matches the communication message. In an example, the message type in question includes any of the following: a noun-selection type, a verb-selection type, an interrogative type, and a particular type. The manner for the inputting method APP to extract a target semantic element from the communication message differs, as the message type in question varies. In an example, the step 203 comprises the following sub-steps.

Firstly, a part-of-speech for each of the semantic elements is determined.

Secondly, the target semantic element is extracted from the communication message, in accordance with a semantic element extraction rule corresponding to the message type in question and the part-of-speech for each of the multiple semantic elements.

The semantic element extraction rule prescribes a part-of-speech feature of the target semantic element to be extracted from the communication message.

By way of example, when the message type in question is a noun-selection type, the corresponding semantic element extraction rule is to extract an adverb before a noun. For example, when the communication message is "ni yao man tou, hai yao hua juan?", the communication message will be split into multiple semantic elements including "ni", "yao", "man tou", "hai yao", "hua juan". The part-of-speech of each of the foregoing semantic elements is a possessive pronoun, an adverb, a noun, an adverb and a noun in turn. When a semantic element extraction rule corresponding to the noun-selection type is used, the extracted target semantic elements are "yao" and "hai yao".

When the message type in question is a verb-selection type, the corresponding semantic element extraction rule is to extract a verb phrase. For example, the verb phrase may be a phrase composed of verb + adverb, a phrase composed of verb + "le (which is a modal particle in Chinese)" + adverb, or a phrase composed of verb + adverb + verb (the two verbs before and after the adverb are the same). For example, when the communication message is "ni chi bu chi xi gua (which means 'Do you eat watermelon or not' in English)", the communication message will be split into multiple semantic elements including "ni", "chi", "bu", "chi", "xi gua". The part-of-speech of each of the foregoing semantic elements is a possessive pronoun, a verb, an adverb, a verb, and a noun in turn. When a semantic element extraction rule corresponding to the verb-selection type is used, the extracted target semantic elements are "chi" and "bu chi".

When the message type in question is an interrogative type, the corresponding semantic element extraction rule is to extract a modal particle. Optionally, the corresponding semantic element extraction rule prescribes that the last modal particle in the communication message is extracted. For example, when the communication message is "zhi dao wo jia zai na ma (which means 'Do you know where my home is' in English)", "ma" will be extracted as the target semantic element according to the semantic element extraction rule corresponding to the interrogative type.

When the message type in question is a particular type, the semantic element extraction rule is to detect whether a preset specific semantic element exists in the communication message and to extract the preset specific semantic element, if any, as the target semantic element. For example, a specific semantic element library is set in advance, including specific semantic elements such as "xie xie", "sheng ri kuai le", "jie ri kuai le (which means 'Happy holidays' in English)", "wo ai ni (which means 'I love you' in English)", "xin nian hao" and etc. When the communication message is "lao po, wo ai ni (which means "I love you, my wife" in English)", "I love you" will be extracted as the target semantic element according to the semantic element extraction rule corresponding to the particular type.

At step 204, it is detected whether the target semantic element is included in a word library corresponding to the message type in question.

A corresponding word library is set for each message type, and each word library includes some semantic elements.

At step 205, if the target semantic element is included in the word library corresponding to the message type in question, the message type in question will be determined as the message type matching the communication message.

For example, when the message type in question is a verb-selection type, the target semantic element extracted from the communication message "ni chi bu chi xi gua" is "chi bu chi". If "chi bu chi" is included in the word library corresponding to the verb-selection type, it is determined that the verb-selection type matches the communication message. If "chi bu chi" is not included in the word library corresponding to the verb-selection type, it is determined that the verb-selection type does not match the communication message.

It is to be noted that, when a plurality of different message types are set in advance, the inputting method APP may perform, for various message types in question, parallel processing or serial processing to determine a message type which matches the communication message. When serial processing is performed, processing priorities among the variety of message types can be set, and the message types in question can be processed in turn according to a descending order of the processing priorities.

At step 206, at least one candidate word for replying to the communication message is acquired, in accordance with the message type which matches the communication message.

In a first case where the message type which matches the communication message is a noun-selection type, the noun indicated by the target semantic element will be extracted from the communication message, wherein the target semantic element is acquired by extracting from the communication message in accordance with the noun-selection type (its corresponding semantic element extraction rule). In this case, the at least one candidate word for replying to the communication message includes the extracted noun. The noun indicated by the target semantic element refers to a noun which is after the target semantic element and is the nearest one from the target semantic element. For example, when the communication message is "ni yao man tou, hai yao hua juan?", the target semantic elements will be "yao" and "hai yao". The nouns indicated by the target semantic elements include "man tou" and "hua juan". Thus, candidate words for replying to the communication message include "man tou" and "hua juan".

Optionally, the inputting method APP also generates a candidate word meaning selecting all or selecting none. Thus, the at least one candidate word for replying to the communication message also include the candidate word which means selecting all or selecting none. In an example, the inputting method APP generates a candidate word meaning selecting all or selecting none, in accordance with an adverb or a verb included in the communication message. In another example, the inputting method APP acquires a preset candidate word meaning selecting all or selecting none, which corresponds to the target semantic element. For example, when the communication message is "ni yao man tou, hai yao hua juan?", candidate words for replying to the communication message also include "dou yao (which means 'I want both of them' in English)" and "dou bu yao (which means 'I want none of them' in English)".

In a second case where the message type which matches the communication message is a verb-selection type, a verb will be extracted from the target semantic element and at least one candidate word for replying to the communication message will be determined based on the verb, wherein the target semantic element is acquired by extracting from the communication message in accordance with the verb-selection type (its corresponding semantic element extraction rule). In this case, the at least one candidate word for replying to the communication message includes at least one of the following: a positive tense form of the verb, a negative tense form of the verb, a perfect tense form of the verb and an imperfect tense form of the verb.

In the following Table-1, different forms of several verbs are shown by way of example.

**Table-1**

| Verb | Positive tense form of the verb | Negative tense form of the verb | Perfect tense form of the verb | Imperfect tense form of the verb |
|---|---|---|---|---|
| Mang (meaning "busy" in English) | Mang | Bu mang (meaning "not busy" in English) | / | / |
| Chi (meaning "eat" in English) | Chi | Bu chi (meaning "do not eat" in English) | Chi le (meaning "have eaten" in English) | Mei chi (meaning "have not eaten" in English) |
| Shui (meaning "sleep" in English) | Shui | Bu shui (meaning "do not sleep" in English) | Shui le (meaning "have slept" in English) | Mei shui (meaning "have not slept" in English) |
| Zhuo (meaning "do" in English) | Zhuo | Bu zhuo (meaning "do not do" in English) | Zhuo le (meaning "have done" in English) | Mei zuo (meaning "have not done" in English) |

The positive tense form of the verb may be the verb itself, the negative tense form of the verb is typically formed by adding "bu" before the verb, the perfect tense form of the verb is typically formed by adding "le" after the verb, and the imperfect tense form of the verb is typically formed by adding "mei" before the verb.

For example, if a communication message is "Zhang san, ni chi le me (meaning 'Zhang san, have you eaten yet' in English)", the message type which matches the communication message is a verb-selection type, the target semantic element extracted from the communication message is "chi le me", and the verb in the target semantic element is "chi". Accordingly, candidate words for replying to the communication message may include "chi", "bu chi", "chi le" and "mei chi".

In a third case where the message type which matches the communication message is an interrogative type, the nearest verb from the target semantic element will be extracted from the communication message, and at least one candidate word for replying to the communication message will be determined based on the verb, wherein the target semantic element is acquired by extracting from the communication message in accordance with the verb-selection type (its corresponding semantic element extraction rule). In this case, the at least one candidate word for replying to the communication message includes at least one of the following: a positive tense form of the verb, a negative tense form of the verb, a perfect tense form of the verb and an imperfect tense form of the verb.

For example, the communication message is "zhi dao wo jia zai na ma", the message type which matches it is an interrogative type, the target semantic element extracted from the communication message is "ma", and the verb nearest from the target semantic element is "zhi dao (meaning 'know' in English)". Accordingly, the at least one candidate word for replying to the communication message may include: "zhi dao", "bu zhi dao (meaning 'do not know' in English", "zhi dao le (meaning 'have known' in English)" and "hai mei zhi dao (meaning 'have not known' in English)".

In a fourth case where the message type which matches the communication message is a particular type, at least one preset candidate word corresponding to the target semantic element will be acquired, wherein the target semantic element is acquired by extracting from the communication message in accordance with the particular type (its corresponding semantic element extraction rule). In this case, the at least one candidate word for replying to the communication message includes a candidate word corresponding to the target semantic element.

For each of specific semantic elements in the word library corresponding to the particular type, candidate words corresponding to the specific semantic element may be stored in advance. In the following Table-2, several groups of specific semantic elements and corresponding candidate words are shown by way of example.

**Table-2**

| Specific semantic element | Candidate words |
|---|---|
| Xie xie | Bu ke qi, bu yong xie (meaning "You are welcome/Not at all" in English) |
| Huan ying (meaning "Welcome" in English) | Xie xie |
| Jie ri kuai le | Ye zhu ni jie ri kuai le (meaning "You too" in English) |
| Sheng ri kuai le | Xie xie |
| Gong xi fa cai (meaning "Wish you prosperity" in English) | Gong xi fa cai |

For example, if the communication message is "xie xie ni! (meaning 'Thank you!') in English", the message type which matches it is a particular type, the target semantic element extracted from the communication message is "xie xie", and candidate words corresponding to the target semantic element are "bu ke qi" and "bu yong xie". Accordingly, candidate words for replying to the communication message may include "bu ke qi" and "bu yong xie".

At step 207, the at least one candidate word is displayed.

After the inputting method APP determines candidate words for replying to the communication message and the communication application invokes the inputting method APP, the inputting method APP will display the candidate words in a candidate word displaying area.

Optionally, the inputting method APP will display the at least one candidate word for replying to the communication message in priority. For example, the inputting method APP displays the at least one candidate word for replying to the communication message on the first page of candidate words in the candidate word displaying area and particularly near the start position of the first page, thereby facilitating improving the efficiency of replying to the communication message.

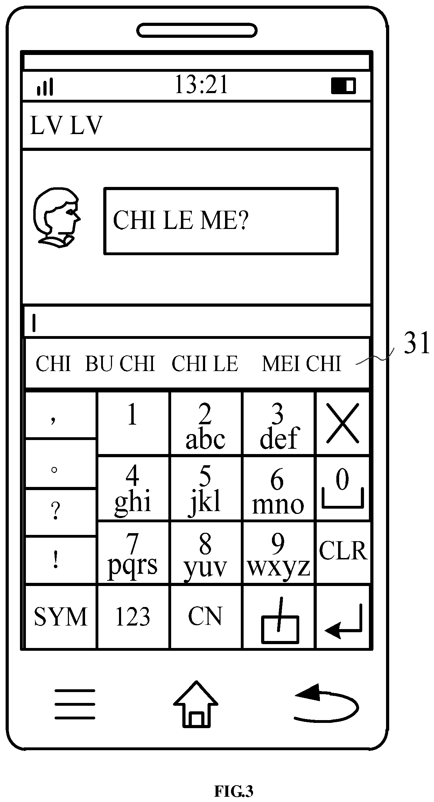

In an example, referring to Fig. 3, after the communication application receives the communication message "chi le me?", the inputting method APP will display candidate words for replying to the communication message in a candidate word display area 31. The candidate words include "chi", "bu chi", "chi le" and "mei chi".

It is to be noted that there may be one or more message types which match the communication message. When there are more than one message types which match the communication message, candidate words for replying to the communication message can be acquired based on each message type which matches the communication message, and all the candidate words acquired based on various message types can be displayed.

At step 208, a selection from the at least one candidate word being displayed is received, and the selected candidate word is written into an input box.

A user may select, in the candidate word displaying area, a candidate word to be input. Correspondingly, the inputting method APP will receive the selection from the at least one candidate word being displayed, and write the selected candidate word into an input box. Thus, the candidate word selected by the user will be input in the input box of the communication application.

Optionally, if the candidate word to be input by the user is not included in the at least one candidate word which is generated automatically by the inputting method APP for replying to the communication message, the user may input a coded string via the inputting method APP. Correspondingly, after receiving the coded string input by the user, the inputting method APP cancels displaying of the at least one candidate word generated automatically for replying to the communication message, and generates candidate words corresponding to the coded string in accordance with a code matching rule and displays the same.

Optionally, after the user completes editing of a communication message to be sent in the input box, the edited communication message is sent to the current contact.

In the embodiment, description is given merely by taking an example where the stpes are performed by the inputting method APP. In this embodiment, the word library corresponding to each message type is stored locally in the terminal. In other possible embodiments, the word library corresponding to each message type may be stored in a server, the inputting method APP sends a communication message to the server, the server generates at least one candidate word for replying to the communication message by matching and feedbacks it to the inputting method APP, and the inputting method APP receives the at least one candidate word sent by the server and then displays it. Storing the word library corresponding to the message type in the terminal facilitates improving the speed of generation of candidate words by the inputting method APP. On the other hand, storing the word library corresponding to the message type in the server has lower requirements on processing and storage capabilities of the terminal. In practical application, either of them may be used according to the actual situation.

In conclusion, by acquiring a communication message sent by a current contact in a communication application, determining a message type which matches the communication message, and acquiring at least one candidate word for replying to the communication message in accordance with the determined message type, the method provided by this embodiment solves the problem in the related art that the efficiency for generation of candidate words by an inputting method APP is low, and achieves the effect that, after a communication message is received, at least one candidate word will be generated automatically for replying to the communication message. Accordingly, the number of operations required to be performed by the user in replying to the communication message is reduced and the efficiency for generation of candidate words is improved, thereby facilitating improving the efficiency of replying to the communication message.

Furthermore, by differentiating between message types and, for different message types, setting different semantic element extraction rules and candidate word generation rules respectively, accuracy and usability of the generated candidate words can be improved.

In addition, because it is highly possible for a user to reply to the latest received one or more communication messages, generating corresponding candidate words based on the latest received one or more communication messages facilitates improving accuracy of the generated candidate words and meeting the user's requirements better.

In the following are described apparatus embodiments of the present invention, which can be used to perform method embodiments of the present invention. For details not disclosed in the apparatus embodiments of the present invention, reference can be made to the method embodiments of the present invention.

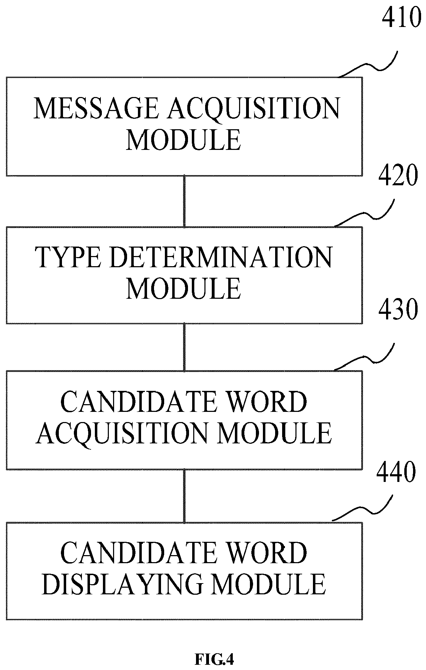

Fig. 4 is a block diagram illustrating a message communicating apparatus according to an exemplary embodiment. The apparatus is capable of implementing the above method example by hardware or through running of corresponding software by hardware. The apparatus comprises: a message acquisition module 410, a type determination module 420, a candidate word acquisition module 430 and a candidate word displaying module 440.

The message acquisition module 410 is configured to acquire a communication message sent by a current contact in a communication application, the communication application being an application with a messaging function.

The type determination module 420 is configured to determine a message type which matches the communication message acquired by the message acquisition module 410.

The candidate word acquisition module 430 is configured to acquire at least one candidate word for replying to the communication message, in accordance with the message type which matches the communication message determined by the type determination module 420.

The candidate word displaying module 440 is configured to display the at least one candidate word acquired by the candidate word acquisition module 430.

In conclusion, by acquiring a communication message sent by a current contact in a communication application, determining a message type which matches the communication message, and acquiring at least one candidate word for replying to the communication message in accordance with the determined message type, the apparatus provided by the embodiment solves the problem in the related art that the efficiency for generation of candidate words by an inputting method APP is low, and achieves the effect that, after a communication message is received, at least one candidate word will be generated automatically for replying to the communication message. Accordingly, the number of operations required to be performed by the user in replying to the communication message can be reduced and the efficiency for generation of candidate words can be improved, thereby facilitating improving the efficiency of replying to the communication message.

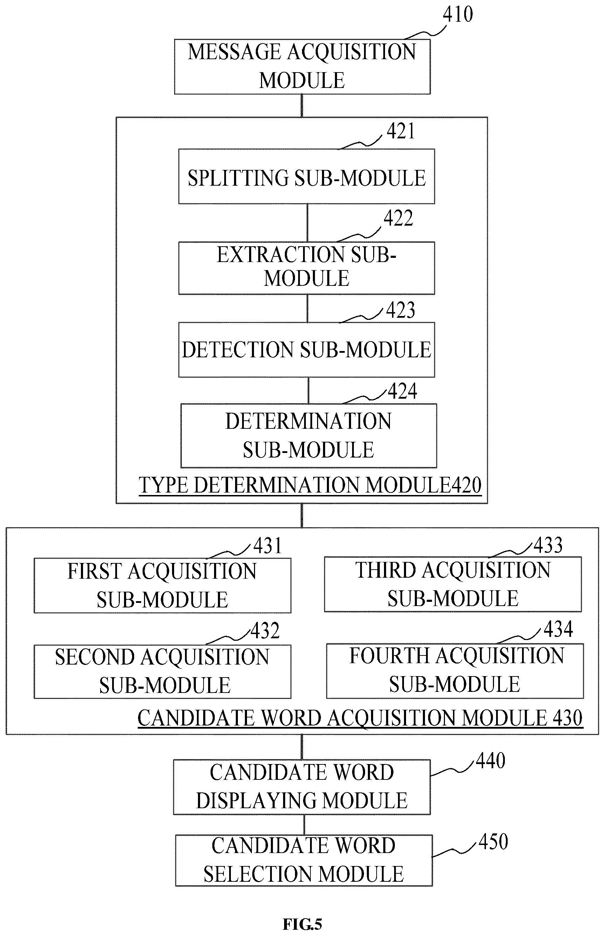

Fig. 5 is a block diagram illustrating a message communicating apparatus according to another exemplary embodiment. The apparatus is capable of implementing the above method example by hardware or through running of corresponding software by hardware. The apparatus comprises: a message acquisition module 410, a type determination module 420, a candidate word acquisition module 430 and a candidate word displaying module 440.

The message acquisition module 410 is configured to acquire a communication message sent by a current contact in a communication application, the communication application being an application with a messaging function.

The type determination module 420 is configured to determine a message type which matches the communication message acquired by the message acquisition module 410.

The candidate word acquisition module 430 is configured to acquire at least one candidate word for replying to the communication message, in accordance with the message type which matches the communication message determined by the type determination module 420.

The candidate word displaying module 440 is configured to display the at least one candidate word acquired by the candidate word acquisition module 430.

Optionally, the type determination module 420 comprises: a splitting sub-module 421, an extraction sub-module 422, a detection sub-module 423, and a determination sub-module 424.

The splitting sub-module 421 is configured to split the communication message into multiple semantic elements.

The extraction sub-module 422 is configured to extract a target semantic element from the communication message acquired by the splitting sub-module 421, in accordance with a message type in question.

The detection sub-module 423 is configured to detect whether the target semantic element extracted by the extraction sub-module 422 is included in a word library corresponding to the message type in question.

The determination sub-module 424 is configured to determine the message type in question as the message type which matches the communication message, when the detection sub-module 423 detects that the target semantic element is included in the word library corresponding to the message type in question.

Optionally, the extraction sub-module 422 is configured to determine a part-of-speech for each of the multiple semantic elements; and extract the target semantic element from the communication message, in accordance with a semantic element extraction rule corresponding to the message type in question and the part-of-speech for each of the multiple semantic elements. The semantic element extraction rule prescribes a part-of-speech feature of the target semantic element to be extracted from the communication message.

Optionally, the candidate word acquisition module 430 comprises a first acquisition sub-module 431.

The first acquisition sub-module 431 is configured to extract, from the communication message, a noun indicated by a target semantic element, when the message type which matches the communication message is a noun-selection type. The target semantic element is acquired by extracting from the communication message in accordance with the noun-selection type, and the at least one candidate word for replying to the communication message includes the noun.

Optionally, the candidate word acquisition module 430 comprises a second acquisition sub-module 432.

The second acquisition sub-module 432 is configured to: extract a verb in the target semantic element, when the message type which matches the communication message is a verb-selection type, wherein the target semantic element is acquired by extracting from the communication message in accordance with the verb-selection type; and determine, based on the verb, the at least one candidate word for replying to the communication message. The at least one candidate word for replying to the communication message includes at least one of the following: a positive tense form of the verb, a negative tense form of the verb, a perfect tense form of the verb and an imperfect tense form of the verb.

Optionally, the candidate word acquisition module 430 comprises a third acquisition sub-module 433.

The third acquisition sub-module 433 is configured to: extract, from the communication message, a nearest verb from the target semantic element, when the message type which matches the communication message is a interrogative type, wherein the target semantic element is acquired by extracting from the communication message in accordance with the interrogative type; and determine, based on the verb, the at least one candidate word for replying to the communication message. The at least one candidate word for replying to the communication message includes at least one of the following: a positive tense form of the verb, a negative tense form of the verb, a perfect tense form of the verb and an imperfect tense form of the verb.

Optionally, the candidate word acquisition module 430 comprises a fourth acquisition sub-module 434.

The fourth acquisition sub-module 434 is configured to acquire at least one preset candidate word corresponding to the target semantic element, when the message type which matches the communication message is a particular type. The target semantic element is acquired by extracting from the communication message in accordance with the particular type, and the at least one candidate word for replying to the communication message includes the at least one candidate word corresponding to the target semantic element.

Optionally, the message acquisition module 410 is configured to acquire a communication message sent during a single chat session by the current contact in the communication application, or to acquire a communication message sent during a group chat session by the current contact in the communication application.

Optionally, the communication message is the last n communication messages sent by the current contact, wherein n is an integer equal to or greater than 1.

Optionally, the apparatus further comprises a candidate word selection module 450.

The candidate word selection module 450 is configured to receive a selection from the at least one candidate word being displayed and to write the selected candidate word into an input box.

In conclusion, by acquiring a communication message sent by a current contact in a communication application, determining a message type which matches the communication message, and acquiring at least one candidate word for replying to the communication message in accordance with the determined message type, the apparatus provided by the embodiment solves the problem in the related art that the efficiency for generation of candidate words by an inputting method APP is low, and achieves the effect that, after a communication message is received, at least one candidate word will be generated automatically for replying to the communication message. Accordingly, the number of operations required to be performed by the user in replying to the communication message can be reduced and the efficiency for generation of candidate words can be improved, thereby facilitating improving the efficiency of replying to the communication message.

Furthermore, by differentiating between message types and, for different message types, setting different semantic element extraction rules and candidate word generation rules respectively, accuracy and usability of the generated candidate words can be improved.

In addition, because it is highly possible for a user to reply to the latest received one or more communication messages, generating corresponding candidate words based on the latest received one or more communication messages facilitates improving accuracy of the generated candidate words and meeting the user's requirements better.

It is to be noted that, when the apparatuses provided by the above embodiments implement their functions, the above division into respective functional modules is only given by way of example. However, in practical application, the above functions may be implemented by different functional modules according to actual needs. That is, the internal structure of the device may be divided into different functional modules to realize all or part of the above functions.

With respect to the apparatuses in the above embodiments, the specific manners for individual modules therein to perform operations have been described in detail in the embodiments of the related methods, and will not be elaborated herein.

According to an exemplary embodiment of the present invention, a message communicating apparatus capable of implementing a message communicating method according to the present invention is provided. The apparatus comprises: a processor; and a memory storing instructions executable by the processor. The processor is configured to: acquire a communication message sent by a current contact in a communication application, the communication application being an application with a messaging function; determine a message type which matches the communication message; acquire at least one candidate word for replying to the communication message, in accordance with the message type which matches the communication message; and display the at least one candidate word.

Optionally, the processor is configured to: split the communication message into multiple semantic elements; extract a target semantic element from the communication message, in accordance with a message type in question; detect whether the target semantic element is included in a word library corresponding to the message type in question; and determine the message type in question as the message type which matches the communication message, if the target semantic element is included in the word library corresponding to the message type in question

Optionally, the processor is configured to: determine a part-of-speech for each of the multiple semantic elements; and extract the target semantic element from the communication message, in accordance with a semantic element extraction rule corresponding to the message type in question and the part-of-speech for each of the multiple semantic elements, wherein the semantic element extraction rule prescribes a part-of-speech feature of the target semantic element to be extracted from the communication message.

Optionally, the processor is configured to: extract, from the communication message, a noun indicated by a target semantic element, if the message type which matches the communication message is a noun-selection type. The target semantic element is acquired by extracting from the communication message in accordance with the noun-selection type, and the at least one candidate word for replying to the communication message includes the noun.

Optionally, the processor is configured to: extract a verb in a target semantic element, if the message type which matches the communication message is a verb-selection type, wherein the target semantic element is acquired by extracting from the communication message in accordance with the verb-selection type; and determine, based on the verb, the at least one candidate word for replying to the communication message. The at least one candidate word for replying to the communication message includes at least one of the following: a positive tense form of the verb, a negative tense form of the verb, a perfect tense form of the verb and an imperfect tense form of the verb.

Optionally, the processor is configured to: extract, from the communication message, a nearest verb from a target semantic element, if the message type which matches the communication message is an interrogative type, wherein the target semantic element is acquired by extracting from the communication message in accordance with the interrogative type; and determine, based on the verb, the at least one candidate word for replying to the communication message. The at least one candidate word for replying to the communication message includes at least one of the following: a positive tense form of the verb, a negative tense form of the verb, a perfect tense form of the verb and an imperfect tense form of the verb.

Optionally, the processor is configured to: acquire at least one preset candidate word corresponding to a target semantic element, if the message type which matches the communication message is a particular type. The target semantic element is acquired by extracting from the communication message in accordance with the particular type, and the at least one candidate word for replying to the communication message includes the at least one candidate word corresponding to the target semantic element.

Optionally, the processor is configured to: acquire a communication message sent during a single chat session by the current contact in the communication application; or acquire a communication message sent during a group chat session by the current contact in the communication application.

Optionally, the communication message is the last n communication messages sent by the current contact, wherein n is an integer equal to or greater than 1.

Optionally, the processor is configured to: receive a selection from the at least one candidate word being displayed, and write the selected candidate word into an input box.

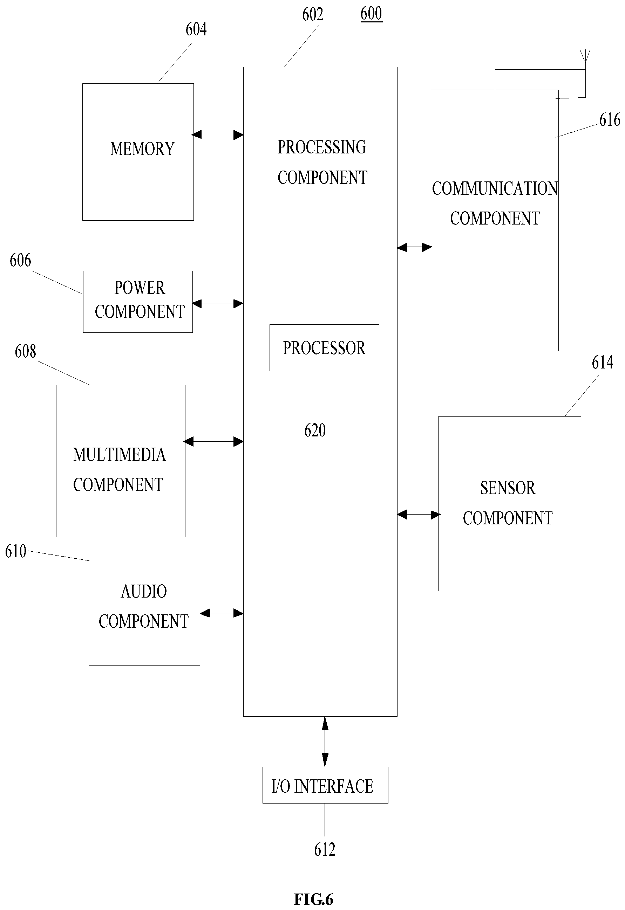

Fig. 6 is a block diagram illustrating an apparatus 600 according to an exemplary embodiment. For example, the apparatus 600 may be a mobile phone, a computer, a digital broadcast terminal, a messaging device, a gaming console, a tablet, a medical device, exercise equipment, a personal digital assistant or the like.

Referring to Fig. 6, the apparatus 600 may include one or more of the following components: a processing component 602, a memory 604, a power component 606, a multimedia component 608, an audio component 610, an input/output (I/O) interface 612, a sensor component 614 and a communication component 616.

The processing component 602 generally controls the overall operations of the apparatus 600, for example, display, phone call, data communication, camera operation and recording operation. The processing component 602 may include one or more processors 618 to execute instructions to perform all or part of the steps in the above described methods. In addition, the processing component 602 may include one or more modules to facilitate the interaction between the processing component 602 and other components. For example, the processing component 602 may include a multimedia module to facilitate the interaction between the multimedia component 608 and the processing component 602.

The memory 604 is configured to store various types of data to support the operation performed on the apparatus 600. Examples of such data include instructions for any applications or methods operated on the apparatus 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the apparatus 600. The power component 606 may include a power supply management system, one or more power sources, and any other components associated with the generation, management, and distribution of power in the apparatus 600.

The multimedia component 608 includes a screen providing an output interface between the apparatus 600 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive external multimedia data while the apparatus 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the apparatus 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the apparatus 600. For instance, the sensor component 614 may detect an open/closed status of the apparatus 600, relative positioning of components, e.g., the display and the keypad, of the apparatus 600, a change in position of the apparatus 600 or a component of the apparatus 600, a presence or absence of user contact with the apparatus 600, an orientation or an acceleration/deceleration of the apparatus 600, and a change in temperature of the apparatus 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, a microwave sensor or a temperature sensor.

The communication component 616 is configured to facilitate wired or wireless communication between the apparatus 600 and other devices. The apparatus 600 can access a wireless network based on a communication standard, such as WiFi, 2G, or 3G, or a combination thereof. In one exemplary embodiment, the communication component 616 receives a broadcast signal or broadcast related information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 600 may be implemented with one or more application specific integrated circuits (ASIC), digital signal processors (DSP), digital signal processing devices (DSPD), programmable logic devices (PLD), field programmable gate arrays (FPGA), controllers, micro-controllers, microprocessors, or other electronic components, for performing the above described methods.

In exemplary embodiments, there is also provided a non-transitory computer-readable storage medium including instructions, such as included in the memory 604, executable by the processor 620 of the apparatus 600, for performing the above-described methods. For example, the non-transitory computer-readable storage medium may be a ROM, a RAM, a CD-ROM, a magnetic tape, a floppy disc, an optical data storage device, and the like.

It is to be understood that the term "a plurality of/multiple" mentioned in this application refers to two or more. The expression "and/or" denotes three cases. For example, A and/or B may denote cases where only A exists, both A and B exist, and only B exists. The symbol "/" represents "or".

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope and spirit of the invention being indicated by the appended claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A message communicating method executed in a communication terminal, comprising:
receiving (101, 201) a communication message sent by a current contact in a communication application, the communication application being an application with a messaging function;
determining (102) a message type which matches the communication message;
determining (103) at least one candidate word for replying to the communication message, in accordance with the message type which matches the communication message; and
displaying (104) the at least one candidate word.

2. The method according to claim 1, wherein determining (102) the message type which matches the communication message comprises:
splitting (202) the communication message into multiple semantic elements;
extracting (203) a target semantic element from the communication message, in accordance with a message type in question;
detecting (204) whether the target semantic element is included in a word library corresponding to the message type in question; and
determining (205) the message type in question as the message type which matches the communication message, if the target semantic element is included in the word library corresponding to the message type in question.

3. The method according to claim 2, wherein extracting (203) the target semantic element from the communication message in accordance with the message type in question comprises:
determining a part-of-speech for each of the multiple semantic elements; and
extracting the target semantic element from the communication message, in accordance with a semantic element extraction rule corresponding to the message type in question and the part-of-speech for each of the multiple semantic elements,
wherein the semantic element extraction rule prescribes a part-of-speech feature of the target semantic element to be extracted from the communication message.

4. The method according to claim 1, wherein determining (103) at least one candidate word for replying to the communication message, in accordance with the message type which matches the communication message, comprises:
extracting, from the communication message, a noun indicated by a target semantic element, if the message type which matches the communication message is a noun-selection type, wherein the target semantic element is acquired by extracting from the communication message in accordance with the noun-selection type,
wherein the at least one candidate word for replying to the communication message includes the noun.

5. The method according to claim 1, wherein determining (103) at least one candidate word for replying to the communication message, in accordance with the message type which matches the communication message, comprises:
extracting a verb in the target semantic element, if the message type which matches the communication message is a verb-selection type, wherein the target semantic element is acquired by extracting from the communication message in accordance with the verb-selection type; and
determining, based on the verb, the at least one candidate word for replying to the communication message,
wherein the at least one candidate word for replying to the communication message includes at least one of the following: a positive tense form of the verb, a negative tense form of the verb, a perfect tense form of the verb and an imperfect tense form of the verb.

6. The method according to claim 1, wherein determining (103) at least one candidate word for replying to the communication message, in accordance with the message type which matches the communication message, comprises:
extracting, from the communication message, a nearest verb from the target semantic element, if the message type which matches the communication message is an interrogative type, wherein the target semantic element is acquired by extracting from the communication message in accordance with the interrogative type; and
determining, based on the verb, the at least one candidate word for replying to the communication message,
wherein the at least one candidate word for replying to the communication message includes at least one of the following: a positive tense form of the verb, a negative tense form of the verb, a perfect tense form of the verb and an imperfect tense form of the verb.

7. The method according to claim 1, wherein determining (103) at least one candidate word for replying to the communication message, in accordance with the message type which matches the communication message, comprises:
acquiring at least one preset candidate word corresponding to the target semantic element, if the message type which matches the communication message is a particular type, wherein the target semantic element is acquired by extracting from the communication message in accordance with the particular type,
wherein the at least one candidate word for replying to the communication message includes the at least one candidate word corresponding to the target semantic element.

8. The method according to any of claim 1 to 7, wherein receiving the communication message sent by the current contact in the communication application comprises:
acquiring a communication message sent during a single chat session by the current contact in the communication application; or
acquiring a communication message sent during a group chat session by the current contact in the communication application.

9. The method according to any of claim 1 to 8, wherein
the communication message is the last n communication messages sent by the current contact, wherein n is an integer equal to or greater than 1.

10. The method according to any of claim 1 to 9, further comprising:
receiving a selection from the at least one candidate word being displayed, and writing the selected candidate word into an input box.

11. A message communicating apparatus, comprising:
a message receiving module (410) configured to receive a communication message sent by a current contact in a communication application, the communication application being an application with a messaging function;
a type determination module (420) configured to determine a message type which matches the communication message;
a candidate word determining module (430) configured to determine at least one candidate word for replying to the communication message in accordance with the message type which matches the communication message; and
a candidate word displaying module (440) configured to display the at least one candidate word.

12. The apparatus according to claim 11, wherein the type determination module (420) comprises:
a splitting sub-module (421) configured to split the communication message into multiple semantic elements;
an extraction sub-module (422) configured to extract a target semantic element from the communication message in accordance with a message type in question;
a detection sub-module (423) configured to detect whether the target semantic element is included in a word library corresponding to the message type in question; and
a determination sub-module (424) configured to determine the message type in question as the message type which matches the communication message, when the target semantic element is included in the word library corresponding to the message type in question.

13. The apparatus according to claim 12, wherein the extraction sub-module is configured to:
determine a part-of-speech for each of the multiple semantic elements; and
extract the target semantic element from the communication message, in accordance with a semantic element extraction rule corresponding to the message type in question and the part-of-speech for each of the multiple semantic elements;
wherein the semantic element extraction rule prescribes a part-of-speech feature of the target semantic element to be extracted from the communication message.

14. The apparatus according to claim 11, wherein the candidate word determining module comprises a first acquisition sub-module configured to:
extract, from the communication message, a noun indicated by a target semantic element, when the message type which matches the communication message is a noun-selection type, wherein the target semantic element is acquired by extracting from the communication message in accordance with the noun-selection type,
wherein the at least one candidate word for replying to the communication message includes the noun.

15. The apparatus according to claim 11, wherein the candidate word determining module comprises a second acquisition sub-module configured to:
extract a verb in the target semantic element, when the message type which matches the communication message is a verb-selection type, wherein the target semantic element is acquired by extracting from the communication message in accordance with the verb-selection type; and
determine, based on the verb, the at least one candidate word for replying to the communication message,
wherein the at least one candidate word for replying to the communication message includes at least one of the following: a positive tense form of the verb, a negative tense form of the verb, a perfect tense form of the verb and an imperfect tense form of the verb, or
the candidate word acquisition module comprises a third acquisition sub-module configured to:
extract, from the communication message, a nearest verb from the target semantic element, when the message type which matches the communication message is a interrogative type, wherein the target semantic element is acquired by extracting from the communication message in accordance with the interrogative type; and
determine, based on the verb, the at least one candidate word for replying to the communication message,
wherein the at least one candidate word for replying to the communication message includes at least one of the following: a positive tense form of the verb, a negative tense form of the verb, a perfect tense form of the verb and an imperfect tense form of the verb, or
the candidate word acquisition module comprises a fourth acquisition sub-module configured to:
acquire at least one preset candidate word corresponding to the target semantic element, when the message type which matches the communication message is a particular type, wherein the target semantic element is acquired by extracting from the communication message in accordance with the particular type,
wherein the at least one candidate word for replying to the communication message includes the at least one candidate word corresponding to the target semantic element.
